# EUROPEAN PATENT APPLICATION

(11) **EP 1 760 655 A2**
(43) Date of publication of application: **07.03.2007**
(21) Application number: 06119447.8
(22) Date of filing: 24.08.2006
(51) Int. Cl.: G06Q 30/00

(54) **System and method to manage advertising and coupon presentation in vehicles**

(30) Priority: 26.08.2005 US 213106
(71) Applicant: Palo Alto Research Center Incorporated, Palo Alto, California 94304 (US)
(72) Inventor: Huang, Qingfeng, San Jose, CA 95129 (US); Greene, Daniel H., Sunnyvale, CA 94087 (US); Liu, Juan, Milpitas, CA 95035 (US); Calabria, Hermann, Mountain View, CA 94040 (US)
(74) Representative: Grünecker, Kinkeldey, Stockmair & Schwanhäusser Anwaltssozietät

(57) **Abstract**

A method for utilizing presentation slots to manage advertising and coupon presentation to mobile communication devices over a communication network is stored and executed as an application for use by network devices. The method includes sensing vehicle context and vehicle events, based on vehicle sensor data. Presentation slots, particular circumstances for which advertisements may be presented to a vehicle user, are configured. When a presentation slot is triggered through sensing of a vehicle context or vehicle event, the method identifies advertisements to be presented to the vehicle user, with the advertisements corresponding to configured presentation slots. The identified advertisements are presented to the vehicle user.

## Description

### BACKGROUND

This disclosure relates generally to the advertisement of goods and services to mobile units and more specifically to a method and system utilizing presentation slots to manage advertising and coupon presentation to mobile units.

Traditionally, roadside billboards have acted as a means for advertising goods and services to travelers, including drivers, walkers, and bikers. This advertising outlet has been frequently used by restaurants, automobile dealers, convenience stores, hotels, hospitals, and other service industries and manufacturers to provide information on services or goods available, as well as the location of the advertiser. These businesses depend on customers responding to roadside advertising or observing the business in close proximity to the roadway. The advent of vehicles having vastly improved information delivery capabilities based on a combination of peer-to-peer technologies, such as 802.11 or DSRC, and cellular technologies, such as G3, may significantly expand the advertising options of service providers. For commercial reasons, it is very likely these new vehicle information capabilities will be used to deliver advertisements and implement other marketing strategies. This would be in addition to, and perhaps in association with, delivery of information on traffic, safety, weather, and other entertainment content. However, the capacity to deliver advertisements will vastly exceed the number of advertisements that will be welcome by vehicle users. To address the issue of limiting the distraction and irritation that would result if advertisements were delivered frequently, it would be useful to have a system that would limit the quantity and improve the quality of the advertisements received by individual vehicles.

### BRIEF SUMMARY

The disclosed embodiments provide examples of improved solutions to the problems noted in the above Background discussion and the art cited therein. There is shown in these examples an improved method for utilizing presentation slots to manage advertising and coupon presentation to mobile communication devices over a communication network. The method is stored and executed as an application for use by network devices. The method includes sensing vehicle context and vehicle events, based on vehicle sensor data. Presentation slots, particular circumstances for which advertisements may be presented to a vehicle user, are configured. When a presentation slot is triggered through sensing of a vehicle context or vehicle event, the method identifies advertisements to be presented to the vehicle user, with the advertisements corresponding to configured presentation slots. The identified advertisements are presented to the vehicle user.
In a further embodiment said vehicles have a continuous connection with the network. In a further embodiment the method for utilizing presentation slots to manage advertising and coupon presentation further comprises:
querying a network server for at least one advertisement suited to at least one presentation slot;
identifying said at least one advertisement to present to said vehicle user; and
transmitting said at least one advertisement to said vehicle user.
In a further embodiment querying said network server is performed automatically upon the occurrence of a presentation slot. In a further embodiment the method for utilizing presentation slots to manage advertising and coupon presentation further comprises monitoring the response of vehicle users to specific coupons or advertisements and computing the cost to a service provider for acceptance of an advertisement offer or coupon by said vehicle user.

In another embodiment there is provided a system for utilizing presentation slots to manage advertising and coupon presentation to mobile communication devices over a communication network, with the system stored and executed as an application for use by network devices. The system includes location service module for providing vehicle location information data and a context detection module for identifying information which would be useful for the purpose of targeting advertising to a vehicle. Targeting of advertising is accomplished through the use of configured presentation slots, with each presentation slot consisting of a particular circumstance for which advertisements may be presented to a vehicle user. A navigation support module provides a navigation map and navigation plan to the vehicle user. A transaction event detector module identifies an advertisement selection event, and an authentication module obtains a certification record permitting propagation of a submitted advertisement on the network. A reverse bidding management module solicits and selects among competing advertisements. Selected advertisements are presented to the vehicle user through a presentation module, while a communication module communicates with advertising services and advertisers to request and receive bids for services.
In a further embodiment said vehicles have a connection with a server on the communication network.
In a further embodiment the system for utilizing presentation slots to manage advertising and coupon presentation further comprises a network server having a coupon/ad management module comprising:
coupon/ad admission module for advertisement availability management on the network, wherein said availability management comprises at least one member selected from the group consisting of accepting coupons or advertisements from service providers with a chosen pricing scheme, determining the initial scope over which each coupon or advertisement will be disseminated, and authenticating the coupon or advertisement for propagation in the network;
coupon/ad distribution module for propagating said coupon or advertisement in the network according to prescribed scope parameters; and
billing module for monitoring the response of vehicle users to specific coupons or advertisements and computing the cost to a service provider for acceptance of an advertisement offer or coupon by said vehicle user.
In a further embodiment said submitted advertisement comprises:
advertisement content, wherein said content includes at least one member of the group consisting of text or image information, coupons, discounts, and special offers;
presentation slot specification, including at least one request for presentation of said advertisement in at least one selected presentation slot; and
price specification, comprising the amount a service provider is offering to pay when said vehicle user responds to said advertisement.
In a further embodiment the system for utilizing presentation slots to manage advertising and coupon presentation further comprises at least one geographic preference for presentation of said submitted advertisement.
In a further embodiment the system for utilizing presentation slots to manage advertising and coupon presentation further comprises an advertisement selection module for identifying advertisements to be presented to said vehicle user, wherein identifying advertisements includes satisfying presentation slot requirements with matching advertisement content.
In a further embodiment said configured presentation slots include an initial configuration for presentation slot management provided by the vehicle manufacturer.
In a further embodiment the system for utilizing presentation slots to manage advertising and coupon presentation further comprises modification of said initial configuration by said vehicle user, wherein said modification comprises at least one member selected from the group consisting of adding at least one presentation slot, modifying at least one presentation slot, selecting at least one presentation slot, and deselecting at least one presentation slot.
In a further embodiment the system for utilizing presentation slots to manage advertising and coupon presentation further comprises specification of excluded slots by said vehicle manufacturer.

In yet another embodiment there is disclosed a method for utilizing presentation slots to manage advertising and coupon presentation to mobile communication devices over a communication network. The method is stored and executed as an application for use by network devices. The method includes controlling times and events to be used as presentation slots, with each presentation slot consisting of a particular circumstance for which advertisements may be presented to a vehicle user. Sensor data is integrated to trigger presentation slots, with sensor data including vehicle context based on vehicle navigation data or a vehicle event based on vehicle sensor data. Service providers compete for presentation slots, with the number of advertisements presented to a vehicle controlled through presenting those advertisements corresponding to presentation slots.

In yet another embodiment there is provided a system for utilizing presentation slots to manage advertising and coupon presentation to mobile communication devices over a communication network. The system includes capability for sensing vehicle context and vehicle events and for configuring presentation slots. Each presentation slot consists of a particular circumstance for which advertisements may be presented to a vehicle user. Configured presentation slots are triggered through sensing of a vehicle context or vehicle event and advertisements are identified for presentation to the vehicle user, with the identified advertisements corresponding to configured presentation slots. The identified advertisements are then presented to the vehicle user.

In yet another embodiment, there is disclosed a computer-readable storage medium having computer readable program code embodied in the medium causing the computer to perform method steps for utilizing presentation slots to manage advertising and coupon presentation to mobile communication devices over a communication network. The method includes sensing vehicle context and vehicle events, based on vehicle sensor data. Presentation slots, particular circumstances for which advertisements may be presented to a vehicle user, are configured. When a presentation slot is triggered through sensing of a vehicle context or vehicle event, the method identifies advertisements to be presented to the vehicle user, with the advertisements corresponding to configured presentation slots. The identified advertisements are presented to the vehicle user.

### BRIEF DESCRIPTION OF THE DRAWINGS

The foregoing and other features of the embodiments described herein will be apparent and easily understood from a further reading of the specification, claims and by reference to the accompanying drawings in which:

**FIG. 1** illustrates an example embodiment of the vehicle advertising network;

**FIG. 2** illustrates one possible embodiment of a computing architecture providing reverse bidding management for a vehicle advertising network;

**FIG. 3** illustrates an example embodiment of operation of an advertisement presentation procedure in mobile vehicles;

**FIG. 4** is a flowchart showing an embodiment of the method for advertisement presentation in mobile vehicles;

**FIG. 5** is a flowchart showing an embodiment of the configuration procedure associated with the method of Figure 4; and

**FIG. 6** is a flowchart showing another embodiment of the method for advertisement presentation in mobile vehicles.

### DETAILED DESCRIPTION

The system and method described herein is directed to limiting the quantity and improving the quality of advertisements through management of "presentation slots". A presentation slot is a particular circumstance when advertisements can be presented to a driver. These presentation slots may be regulated by the vehicle, perhaps being dependent on manufacturer and/or user definition and configuration or on sensing of the vehicle operating environment. Alternatively, they may be regulated by external factors, such as sensing of the external environment, an economic mechanism to award slots to advertisers, or a delivery mechanism to control the amount, location, and context of delivered advertisements. Examples of events that may be designated as presentation slots include:
1. Car start
2. Specifying destination to onboard navigation system
3. Low gas warning
4. Miscellaneous vehicle malfunction warnings
5. Stopping in a traffic jam
6. Transitions in road type (highway to surface streets)
7. Transition in residential or political boundary (city limits, state line)
8. Meal times or other time of day events
9. Driver break advisory (based on driving behavior)
10. Passenger break advisory (restless children)
11. Change of destination
12. Driver initiated search for roadside services

While many of these presentation slots could be pre-programmed into the vehicle, the system allows the driver to select which slots are available for advertisers. To allow for future evolution the system accepts definitions of new presentation slots from the network, and with the vehicle owner's permission, install these new slots as well. The method and system described herein combines four elements to limit the quantity and improve the quality of the advertisements. These elements include a way of controlling times and events that will be used as presentation slots. Presentation slots would be specified initially by the vehicle manufacturer and then subsequently adjusted by vehicle users. Second, sensor data is integrated to trigger the presentation slots. This ties the presentations to real-world events, such as a low fuel warning, where the vehicle user will be more amenable to interaction with the vehicle information systems. Third, an economic mechanism, such as an auction, allows advertisers to compete for presentation slots. A well-designed mechanism insures that the winners of the presentation slots will have the most economically viable (and presumably most relevant) advertisements. Fourth, a delivery mechanism allows advertisers to control the number of advertisements presented, and targets vehicles based on the nature of the presentation slot and the location and direction of travel of the vehicle. While for convenience and brevity in the following discussion a vehicle is described as an automobile moving on a roadway and the traveler may be described as a driver, it is noted that vehicle as used herein includes any mobile entity with a computing device having wireless communication capability, such as a boat, an airplane, or a user carrying a cell phone, as well as an automobile. All are fully contemplated by the specification and scope of the claims herein.

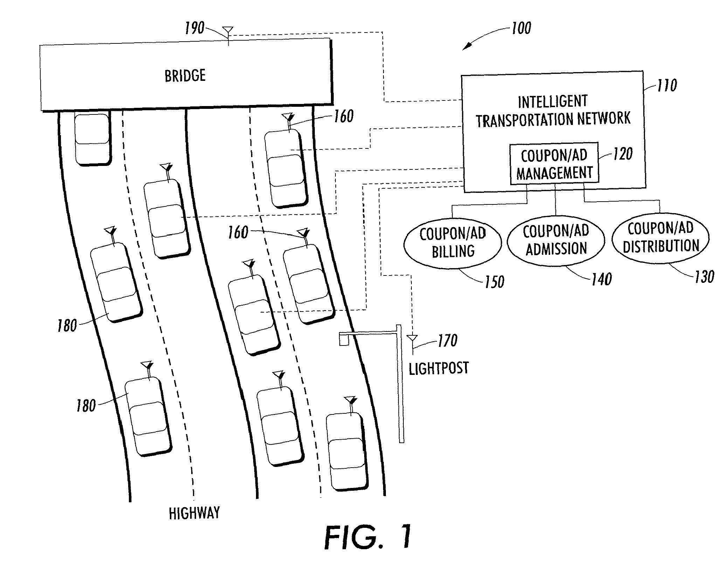

In the following description numerous specific details are set forth in order to provide a thorough understanding of the system and method. It would be apparent, however, to one skilled in the art to practice the system and method without such specific details. In other instances, specific implementation details have not been shown in detail in order not to unnecessarily obscure the present invention. Referring to Figure 1, the schematic diagram illustrates an example embodiment of the system for vehicle network advertising. Intelligent transportation network 110 may provide various capabilities, such as route information and navigation services, weather information, traffic information, road condition information, neighboring vehicle location, velocity and acceleration information, traffic light signal information, traffic sign information, retail/service location information, and AMBER alert information, among others, as well as advertising management. The server supporting intelligent transportation network 110 may be a general-purpose computer upon which reside the software modules capable of managing system operation. It may also be a system designed specifically for inter vehicle communication into which software modules for coupon/advertisement management have been incorporated.

Within intelligent transportation network 110 resides coupon and advertisement management module 120, which includes coupon/advertisement billing module 150, coupon/advertisement admission module 140, and coupon/advertisement distribution module 130. Coupon/advertisement admission module 140 may perform several functions, including accepting coupons/ads from advertisers with a chosen pricing scheme, determining the initial scope over which each coupon/ad is disseminated, and, optionally, stamping and authenticating the coupons/ads for propagation in the network. Coupon/ad distribution module 130 propagates the coupons/ads in the network according to prescribed scope parameters, such as area and time. Billing module 150 monitors the response of vehicle users to specific coupons and may use that information to compute the cost to the respective advertisers, and may use the information for adjustment of the presentation strategy to improve effectiveness of advertisement presentation. The billing module may also contain a function to trigger removal of propagation of a coupon/ad in the network, for example, upon request by the advertiser. Network 110 transmits information to participating vehicles 180 either directly or through transmission units 170 and 190 located along a roadway.

While the architecture described in Fig 1 is independent of the underlying wireless transmission protocols, existing wireless transmission protocols such as DSRC (Dedicated Short Range Communication protocol), IEEE 802.11 (WiFi) may be used. There are no specific transmission protocols required for a vehicle to participate in the network except for the necessity of having a wireless signal reception interface for the chosen signal band and protocol. For intermediary transmission units such as units 170 and 190, both reception and re-transmission capabilities are needed. The intermediary transmission units may receive signals from satellites or cellular towers, using a protocol and wireless media that are different from the one it uses to transmit to vehicles, as well as the protocol it uses to transmit among vehicles. Generally, network transmissions are based on a geographical broadcast, usually targeting vehicles in a specific area. The user does not need to access the central system before information is transmitted.

Various computing environments may incorporate capabilities for supporting an intelligent transportation network. The following discussion is intended to provide a brief, general description of suitable computing environments in which the method and system may be implemented. Although not required, the method and system will be described in the general context of computer-executable instructions, such as program modules, being executed by a single computer. Generally, program modules include routines, programs, objects, components, data structures, etc., that perform particular tasks or implement particular abstract data types. Moreover, those skilled in the art will appreciate that the method and system may be practiced with other computer system configurations, including hand-held devices, multi-processor systems, microprocessor-based or programmable consumer electronics, networked PCs, minicomputers, mainframe computers, and the like.

The method and system may also be practiced in distributed computing environments where tasks are performed by remote processing devices that are linked through a communication network. In a distributed computing environment, program modules may be located in both local and remote memory storage devices.

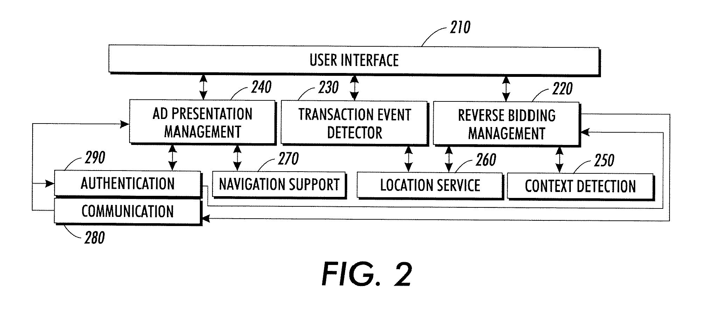

Turning now to Figure 2, the architecture of the software onboard the vehicle is illustrated. Here, user interface 210 communicates directly with reverse bidding management module 220, transaction event detector 230, and ad presentation management module 240. Reverse bidding management module 220 enables retailers and service providers the opportunity of doing more informed targeting of potential customers as well as enabling them to perform inventory management and sales-pricing in real or near-real time. For example, a restaurant manager could be provided with the number and arrival time of customers prior to arrival; travelers would have opportunities to plan their route according to available services and service providers' bids on plausible and competing route plans, to obtain more efficient services. Ad presentation management module 240 permits better advertising targeting and more effective use of ad time for advertisers, while travelers receive more relevant ads and avoid advertising overload.

Transaction event detector 230 receives vehicle location information from location service module 260, which determines location based on GPS data. Location change information may form a basis for detecting a "drive-to" event. Furthermore, a "click" on the items presented on the user interface may form a "click-though" event detected by transaction event detector 230. Detected transaction events, such as a "drive-to" and "click-through" are used later for billing purposes. Context detection module 250 identifies additional information which would be useful for the purposes of targeting advertising. For example, it would determine if a child is present in the vehicle, the number of people in the vehicle, whether the trip is for leisure or business, whether the fuel level is low, the temperature is high, the tire pressure is low, or whether a meal break timing is approaching, etc. This information is then provided to reverse bidding management module 220, which has also received vehicle location information from location service module 260.

Navigation support module 270 assists the driver in navigating the vehicle to specific locations and provides trip information and general area information to ad presentation module 240. Navigation support module 270 includes navigation map and navigation plan (via input from driver.) capability. The navigation maps may include business/service information at each location. Location service module 260 provides vehicle location information to transaction event detector module 230 and reverse bidding management module 220. While for the purposes of discussion modules 260 and 270 are illustrated as being separate modules, their functionality could be combined into a single navigation and location module.

Authentication module 290 checks the signature of the advertisement/coupon data using authentication mechanisms. Any known mechanism for authentication may be employed, for example, checking whether the signature appears among a set of legitimate numeric sequence (provided by the central server). The authenticated ads are passed to ad presentation module 240. Communication module 280 receives ad data and passes it to authentication module 290. In scenarios where no authentication is required, it may pass the received data directly to 240. Additionally authentication module 290 provides authenticated data to reverse bidding management module 220 for reverse bidding management. The reverse bidding management functions include sending bid solicitations to service providers, selecting and aggregating bids along alternate trip routes, seeking additional input from the vehicle user, finalizing a trip plan, sending the plan to the navigation system, communicating the route decision to service providers, monitoring the progress on the route and carrying out alert and reminder functions.

Reverse bidding module 220 may send bid solicitations to communication module 280, which then sends the solicitations out to service providers and provides the received bids, deals, or advertisements and the identification of the bidder to reverse bidding management module 220 for selection, aggregation and presentation to the user through user interface 210. Operation of reverse bidding management module 220 is further described in Attorney Docket Number 20041782-US-NP, U.S. Application Serial No. XX/XXX,XXX, filed August 26, 2005, titled "Reverse Bidding for Trip Services", incorporated by reference hereinabove.

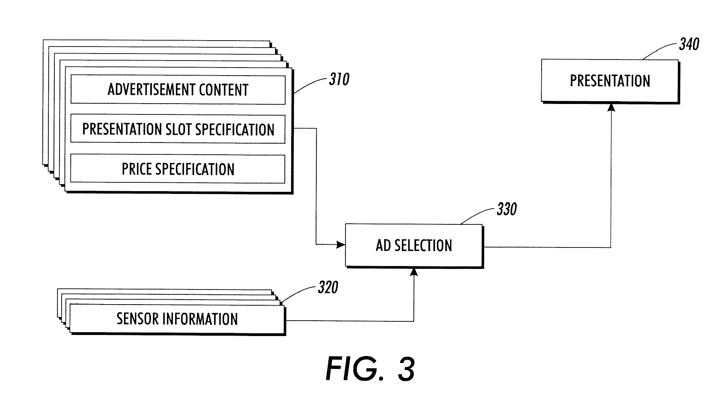

Turning now to Figure 3, in one embodiment advertisement message 310 is a tuple containing advertisement content, a presentation slot specification, and price specification. The advertisement content could be in the form of text or image and could include special offers, such as coupons or discounts. The presentation slot specification could include one or more slot requests to which the ad may be directed. For example, an advertiser may bid on the "low gas warning" slot if they are selling gasoline. The advertiser also indicates what they would be willing to pay when a driver responds to the ad by driving to the gas station. The text of a message of this type might read "Unleaded regular gas $1.80, after a $.20 per gallon discount to the recipient of this message, use exit 25."

Sensors on board the vehicle provide sensor information 320, which may include both sensor and navigation data, such as location, speed, climate condition, tire pressure, occupant count, etc. Most presentation slots depend on sensor data to accurately identify the slot. By limiting the supply of slots, and forcing the advertisers to compete for these slots, it is likely that more relevant advertisements will appear in the slots. For example, gas stations will likely seek and win presentation in the "low fuel" warning slot. Furthermore, the advertisers can direct the advertisements to particular locations relevant to their businesses. In the fuel example, a gas station could offer deeper discounts to users traveling on nearby roads that have poorer visibility of the gas station, or offer deeper discounts on roads that have become less likely sources of customers. By controlling the quantity and size of discounts delivered, a gas station could manage its service queues.

Advertisement message 310 and sensor information 320 are provided to ad selection module 330, which utilizes the combination of information to select appropriate advertisement content based on presentation slot requirements. The presentation slot is valuable to the advertiser because it corresponds to times when the driver would be most amenable to suggestions. Presentation slots are triggered by changes in the environment of the vehicle (for example, low gas), or changes in the external environment (for example, traffic jam ahead). These changes will likely require the driver to make judgments and change plans, which are ideal times for an advertiser to reach a driver. On the other hand, presentation slots are valuable to the driver, since they severely restrict the times when advertising will be presented, and thereby reduce the risk of driver distraction. By design, presentation slots will reach the driver at times (for example low fuel warning) when the information in the advertisement will be useful to the driver, and therefore more welcome than randomly targeted advertising. The selected ads are presented to the driver by presentation module 340, which communicates with the vehicles on the network.

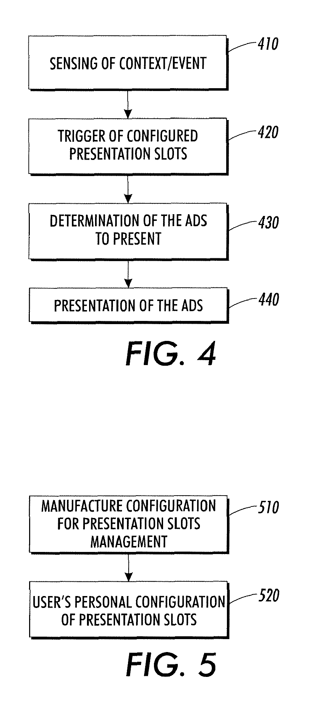

Turning now to Figures 4 and 5, the flowchart shows an embodiment of the method for advertisement presentation in mobile vehicles in an implementation that is less centralized and allows for advertisement to propagate peer-to-peer in an ad hoc network between vehicles. This approach uses an advertising server to certify advertisements before they are propagated, but does not require an online connection between the advertising server and the vehicle when the advertisement is presented. In this case, sensing of event and context are provided at 410. This includes navigation data as well as sensor data provided by on board sensors. Examples of this data include gas level, tire pressure, number of occupant, location, speed, etc. This data provides a trigger for configured presentation slots at 420. Triggering capability may be provided by any known means, for example, the matching of sensed context and the presentation slot specified in the ad.

The presentation slots are configured as illustrated in Figure 5. At 510, a vehicle manufacturer provides an initial configuration for presentation slot management, which is included with the vehicle at the time of purchase. This may include slots directed to sensed vehicle environment, such as a low gas warning, a car start, sudden tire pressure change, closeness to dinner time, or a transition in city/street boundary etc. At 520, the user may provide their personal configuration of presentation slots, either adding slots or modifying, selecting, or deselecting those provided by the manufacturer. Optionally, the manufacturer may specify "excluded slots" in which no ads are allowed. For example, when the vehicle is involved in sharp turns, driving above a certain speed, or any other situation requiring the driver's full attention. Examples of personal configurations could include time of day events, such as meals, or driver/passenger break advisories. Returning now to Figure 4, the configured presentation slots permit determination of the ads to be presented at 430. This determination may occur in the vehicle, rather than in a centralized advertising server. The ads are then presented to the driver at 440, either visually or via audio.

As an illustrative example, in a case in which two coupons are received from gasoline vendors A and B, vendor A may offer to pay $.01 for each "drive-to after seeing coupon" event and vendor B may offer to pay $.02 for the same event. When a low-fuel sensing event triggers the configured "low-gas" presentation slot at 420, at 430 the choice may be made to present B's coupon at a given moment due to its higher payment. On the other hand, at 430 the choice may be to present A's coupon rather than B's coupon if the following is true: B's station is relatively far away, and the driver's preference of A is known from history, especially when the estimated likelihood of the driver ignoring B's coupon is more than fifty per cent. In any case, after the decision is made, it passes the winning ads to 440 for presentation.

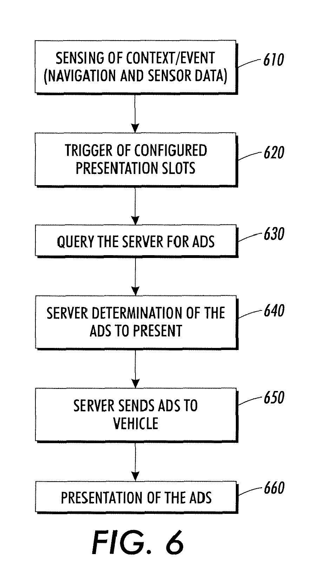

Turning now to Figure 6, the flowchart shows another embodiment of the method for advertisement presentation in mobile vehicles. In this implementation, the vehicles on the network have a continuous low-latency connection with the network. Presentation slot advertising is implemented similarly to search-based keyword advertising, except in this case the occurrence of a presentation slot automatically generates a surrogate search query that includes the label of the presentation slot (for example, "low gas warning") as well as other terms describing the readings of the sensors in the vehicle and the location of the vehicle. This query is sent to an advertising server, which generates a response consisting of a small number of advertisements that are returned to the vehicle and presented to the driver. While for the purposes of this discussion, a single advertising server is presented, it is noted that numerous advertising servers may be distributed throughout the network. In this implementation, advertisers contact an advertising server and bid to have their advertisements presented in presentation slots. These bids are treated according to an auction mechanism in some respects similar to auctions utilized by Yahoo® or Google^{™} to sell keyword advertising (that is, the auction could be based on a pay-per-click-through bid, or it could be based on projected revenue). However, the system and method herein also includes additional means to allow bidders to restrict their bids to particular geographic regions. The advertiser would pay for the advertising only when the driver "responded" to the advertisement, with the response being either:
1. A "click-through" event, in which the driver selects the advertisement and requests additional information, or
2. A navigation event, in which the driver requests that the vehicle's navigation system route to the advertiser's place of business, and/or drives to the advertiser's place of business.

In this embodiment, sensing of event and context are provided at 610. This includes navigation data as well as sensor data provided by on board sensors. Examples of this data include such as a low gas warning or sudden tire pressure change or transition in city/street boundary etc. The sensor data is used to trigger configured presentation slots at 620 as was described with respect to 420 in Figure 4 hereinabove. Configuration of presentation slots is discussed with respect to Figure 5 hereinabove and provides for specification and control of presentation slots by the manufacturer and users of a vehicle. At 630 the vehicle on board system queries the server for advertisements suited to the vehicle user's presentation slots. The server determines which ads to present to the user at 640 by using contextual information. The selected ads are transmitted to the vehicle at 650, and the on board system presents the ads to the user at 660.

As an illustrative example, a low fuel detection at 610 triggers a low-gas presentation slot configured at 620. The system sends out a query for coupons/ads to the server with the vehicle location information, the low gas context, and other information such as the grade and type of gas preferred. The server uses the received information to look up matching ads/coupons in its database, and send a best (according to some expected benefit metric) subset to the vehicle. The vehicle may do some local filtering and ordering and choose the appropriate time to present the coupon/ads to the vehicle user. If the vehicle is in a situation (e.g., high speed, sharp turns, excluded slots) in which it is not desirable to interrupt the driver when the information is received, the presentation may be postponed to a later time, perhaps when the vehicle user notices a low-fuel warning and decelerates.

While the present discussion has been illustrated and described with reference to specific embodiments, further modification and improvements will occur to those skilled in the art. For example, it is possible to include presentation management in the method illustrated in Figure 6. This is useful in those cases in which ads are received from the server, but the context triggering the process has changed (e.g., it was a bad reading from the tire-pressure sensor that triggered 620 and the process after, and the sensor reading become normal shortly thereafter), in which case the ad will not be presented due to the current context. Another variation would be for the server to send a set of optional ads to the vehicle, and let the vehicle operator determine the proper one to use given the most up-to-date context. Additionally, "code" as used herein, or "program" as used herein, is any plurality of binary values or any executable, interpreted or compiled code which can be used by a computer or execution device to perform a task. This code or program can be written in any one of several known computer languages. A "computer," as used herein, can mean any device which stores, processes, routes, manipulates, or performs like operation on data. It is to be understood, therefore, that this disclosure is not limited to the particular forms illustrated and that it is intended in the appended claims to embrace all alternatives, modifications, and variations which do not depart from the spirit and scope of the embodiments described herein.

## Claims

1. A method for utilizing presentation slots to manage advertising and coupon presentation to mobile communication devices over a communication network, the method stored and executed as an application for use by network devices, the method comprising:
sensing at least one vehicle context, wherein said context includes vehicle navigation data;
sensing at least one vehicle event based on vehicle sensor data;
configuring presentation slots, wherein said presentation slot consists of a particular circumstance for which advertisements may be presented to a vehicle user;
triggering at least one configured presentation slot through sensing of at least one vehicle context or at least one vehicle event;
identifying advertisements to be presented to said vehicle user, wherein said advertisements correspond to said at least one configured presentation slot;
presenting said advertisements to said vehicle user.

2. The method for utilizing presentation slots to manage advertising and coupon presentation according to claim 1, wherein configuring said presentation slots includes an initial configuration for presentation slot management provided by the vehicle manufacturer.

3. The method for utilizing presentation slots to manage advertising and coupon presentation according to claim 2, further comprising modification of said initial configuration by said vehicle user, wherein said modification comprises at least one member selected from the group consisting of adding at least one presentation slot, modifying at least one presentation slot, selecting at least one presentation slot, and deselecting at least one presentation slot.

4. The method for utilizing presentation slots to manage advertising and coupon presentation according to claim 2, further comprising specification of excluded slots by said vehicle manufacturer.

5. The method for utilizing presentation slots to manage advertising and coupon presentation according to claim 4, wherein said excluded slots include situations requiring a vehicle user's full attention to the roadway.

6. The method for utilizing presentation slots to manage advertising and coupon presentation according to claim 1, wherein configuring said presentation slots comprises receiving at least one presentation slot definition from the communication network and installing said at least one presentation slot with the vehicle user's permission.

7. A system for utilizing presentation slots to manage advertising and coupon presentation to mobile communication devices over a communication network, the system storing and executing an application for use by network devices, the system comprising:
location service module for providing vehicle location information data;
context detection module for identifying information which would be useful for the purpose of targeting advertising to a vehicle through the use of at least one configured presentation slot, wherein said at least one presentation slot consists of a particular circumstance for which advertisements may be presented to a vehicle user;
navigation support module for providing navigation map and navigation plan to said vehicle user;
transaction event detector module for identifying an advertisement selection event;
authentication module for obtaining a certification record permitting propagation of a submitted advertisement on the network;
reverse bidding management module for soliciting and selecting among competing advertisements;
advertisement presentation management module for presenting said selected advertisement to said vehicle user; and
communication module for communicating with advertising services and advertisers to request and receive bids for services.

8. A method for utilizing presentation slots to manage advertising and coupon presentation to mobile communication devices over a communication network, the method stored and executed as an application for use by network devices, the method comprising:
controlling times and events to be used as presentation slots, wherein each said presentation slot consists of a particular circumstance for which advertisements may be presented to a vehicle user;
integrating sensor data to trigger presentation slots, wherein said sensor data includes at least one vehicle context based on vehicle navigation data or at least one vehicle event based on vehicle sensor data;
competing for said presentation slots by service providers; and
controlling the number of advertisements presented to said vehicle user comprising presenting advertisements corresponding to at least one presentation slot.

9. A system for utilizing presentation slots to manage advertising and coupon presentation to mobile communication devices over a communication network, the system storing and executing an application for use by network devices, the system comprising:
means for sensing at least one vehicle context, wherein said context includes vehicle navigation data;
means for sensing at least one vehicle event based on vehicle sensor data;
means for configuring presentation slots, wherein said presentation slot consists of a particular circumstance for which advertisements may be presented to a vehicle user;
means for triggering at least one configured presentation slot through sensing of at least one vehicle context or at least one vehicle event;
means for identifying advertisements to be presented to said vehicle user, wherein said advertisements correspond to said at least one configured presentation slot;
means for presenting said advertisements to said vehicle user.

10. A computer-readable storage medium having computer readable program code embodied in said medium which, when said program code is executed by a computer causes said computer to perform method steps for utilizing presentation slots to manage advertising and coupon presentation to mobile communication devices over a communication network, said method comprising:
sensing at least one vehicle context, wherein said context includes vehicle navigation data;
sensing at least one vehicle event based on vehicle sensor data;
configuring presentation slots, wherein said presentation slot consists of a particular circumstance for which advertisements may be presented to a vehicle user;
triggering at least one configured presentation slot through sensing of at least one vehicle context or at least one vehicle event;
identifying advertisements to be presented to said vehicle user, wherein said advertisements correspond to said at least one configured presentation slot;
presenting said advertisements to said vehicle user.
